# EUROPEAN PATENT APPLICATION

(11) **EP 4 383 432 A1**
(43) Date of publication of application: **12.06.2024**
(21) Application number: 23747318.6
(22) Date of filing: 25.01.2023
(51) Int. Cl.: H01M 50/30, H01M 50/204, H01M 50/271, H01M 50/35, H01M 50/367, H01M 10/052

(54) **BATTERY PACK AND VEHICLE COMPRISING SAME**

(30) Priority: 25.01.2022 KR 20220011080
(71) Applicant: LG Energy Solution, Ltd., Seoul 07335 (KR)
(72) Inventor: WOO, Sung-Hoon, Daejeon 34122 (KR); SHIN, Ju-Hwan, Daejeon 34122 (KR); PARK, Myung-Ki, Daejeon 34122 (KR); PARK, Won-Kyoung, Daejeon 34122 (KR); SEONG, Jun-Yeob, Daejeon 34122 (KR); LEE, Tae-Kyeong, Daejeon 34122 (KR); LEE, Hyoung-Suk, Daejeon 34122 (KR)
(74) Representative: Plasseraud IP
(86) International application number: PCT/KR2023/001145
(87) International publication number: WO 2023/146277

(57) **Abstract**

The present disclosure discloses a battery pack configured to discharge a high-temperature gas to the outside of the battery pack without affecting other adjacent battery modules when the gas is generated inside the battery module. The battery pack according to one aspect of the present disclosure includes a pack housing having a first accommodation space and a second accommodation space spaced apart from the first accommodation space; a plurality of first battery modules disposed within the first accommodation space; a plurality of second battery modules disposed within the second accommodation space; and a pack cover configured to include a plurality of first independent venting channels configured to guide a venting gas generated in each of the plurality of first battery modules to the outside of the pack housing and a plurality of second independent venting channels configured to guide a venting gas generated in each of the plurality of second battery modules to the outside of the pack housing.

## Description

### TECHNICAL FIELD

The present disclosure relates to a battery pack and a vehicle including the same, and more specifically, to a battery pack configured to discharge a high-temperature gas to the outside of the battery pack without affecting other adjacent battery modules when the gas is generated inside the battery module, and a vehicle including the same.

The present application claims priority to Korean Patent Application No. 10-2022-0011080 filed on January 25, 2022 in the Republic of Korea, the disclosures of which are incorporated herein by reference.

### BACKGROUND ART

As the demand for portable electronic products such as notebooks, video cameras, and mobile phones rapidly increases and the commercialization of robots and electric vehicles begins in earnest, research on high-performance secondary batteries capable of repeated charging and discharging is being actively conducted.

Currently commercialized secondary batteries include nickel cadmium batteries, nickel hydrogen batteries, nickel zinc batteries, and lithium secondary batteries. Among them, lithium secondary batteries are in the limelight because of their advantages of free charge and discharge, very low self-discharge rate, and high energy density, as the memory effect hardly occurs compared to nickel-based secondary batteries.

These lithium secondary batteries mainly use lithium-based oxide and carbon material as a positive electrode active material and a negative electrode active material, respectively. A lithium secondary battery includes an electrode assembly in which a positive electrode plate and a negative electrode plate coated with such a positive electrode active material and a negative electrode active material, respectively, are disposed with a separator therebetween, and an exterior material, that is, a battery case for sealing and accommodating the electrode assembly together with electrolyte.

In general, lithium secondary batteries may be classified into a can-type secondary battery in which an electrode assembly is embedded in a metal can and a pouch-type secondary battery in which an electrode assembly is embedded in a pouch of an aluminum laminate sheet, depending on the shape of the exterior material.

Recently, secondary batteries have been widely used for driving or energy storage not only in small devices such as portable electronic devices, but also in medium and largesized devices such as electric vehicles and energy storage systems (ESSs). Many of these secondary batteries may be accommodated together inside a module case in a state of being electrically connected, which may configure one battery module, and such battery modules may be electrically connected again in a narrow space to increase energy density, which configures a battery pack.

However, when a plurality of battery modules exist in a dense state in a narrow space as above, they may be vulnerable to accidents such as fire or explosion. For example, when an event such as thermal runaway occurs in one battery module, high-temperature gas may be discharged from the battery module. If this gas is not properly discharged to the outside of the battery pack, the thermal event generated in some battery modules may be propagated to other battery modules provided inside the battery pack, which may cause a chain reaction. Also, in this case, the pressure inside the battery pack increases, and there is a possibility of explosion. When the battery pack explodes, not only great damage may be caused to nearby devices or users due to the pressure of the explosion, but also the range and speed of damage may be further increased. Therefore, it is required to develop a battery pack having a structure that allows the high-temperature gas to be safely discharged to the outside of the battery pack without affecting other adjacent battery modules when an abnormality occurs in some battery modules and a gas is discharged.

### DISCLOSURE

### Technical Problem

The present disclosure is designed to solve the problems of the related art, and therefore the present disclosure is directed to allowing the high-temperature venting gas ejected when a thermal event occurs in some battery modules to be safely discharged to the outside of the battery pack without affecting other battery modules inside the battery pack.

In another aspect, the present disclosure is directed to controlling the flow of a venting gas in a desired direction by adding an additional venting channel formation structure to an existing battery pack.

However, the technical problem to be solved by the present disclosure is not limited to the above-mentioned problems, and other problems not mentioned will be clearly understood by those skilled in the art from the description below.

### Technical Solution

In one aspect of the present disclosure, there is provided a battery pack comprising: a pack housing having a first accommodation space and a second accommodation space spaced apart from the first accommodation space; a plurality of first battery modules disposed within the first accommodation space; a plurality of second battery modules disposed within the second accommodation space; and a pack cover configured to include a plurality of first independent venting channels configured to guide a venting gas generated in each of the plurality of first battery modules to the outside of the pack housing and a plurality of second independent venting channels configured to guide a venting gas generated in each of the plurality of second battery modules to the outside of the pack housing.

The plurality of first independent venting channels may include a first side venting channel for guiding the venting gas generated in each of the plurality of first battery modules in a first direction toward the second accommodation space; and a first center venting channel that communicates with the first side venting channel and guides the venting gas generated in each of the plurality of first battery modules in a second direction perpendicular to the first direction.

The plurality of second independent venting channels include a second side venting channel for guiding the venting gas generated in each of the plurality of second battery modules in a third direction toward the first accommodation space; and a second center venting channel that communicates with the second side venting channel and guides the venting gas generated in each of the plurality of second battery modules in a fourth direction perpendicular to the third direction.

The pack cover may include a guide unit provided at a corresponding position between the plurality of first independent venting channels adjacent to each other and a corresponding position between the plurality of second independent venting channels adjacent to each other, respectively.

The guide unit may be configured to block communication between the plurality of first independent venting channels adjacent to each other and communication between the plurality of second independent venting channels adjacent to each other.

The pack cover may include a guide unit provided at a corresponding position between the plurality of first independent venting channels adjacent to each other and a corresponding position between the plurality of second independent venting channels adjacent to each other; a cover plate configured to cover the accommodation space of the pack housing; and a channel cover provided at a corresponding position between the first accommodation space and the first center venting channel and between the second accommodation space and the second center venting channel, respectively, and configured so that the guide unit seats thereon.

The first independent venting channel and the second independent venting channel may have a groove shape formed on an inner surface of the cover plate, respectively.

The battery pack may include a first barrier disposed at a corresponding position between the first battery modules adjacent to each other and a corresponding position between the second battery modules adjacent to each other, respectively.

The battery pack may include a second barrier disposed at a corresponding position between the first accommodation space and the second accommodation space.

The first barrier may be configured to block the movement of a venting gas between the accommodation spaces of the first battery modules adjacent to each other and the movement of a venting gas between the accommodation spaces of the second battery modules adjacent to each other.

The second barrier may be configured to block the movement of a venting gas between the first accommodation space and the second accommodation space.

The battery pack may include a sealing member provided to at least one position between the first barrier and the pack cover and between the first barrier and the pack housing.

The pack housing may have a gas collection space formed in at least one of one side and the other side.

The battery pack may include a venting device configured to allow the venting gas in the gas collection space to be discharged to the outside of the pack housing.

A vehicle according to an embodiment of the present disclosure for achieving the above object includes the battery module according to the present disclosure.

### Advantageous Effects

According to one aspect of the present disclosure, a high-temperature venting gas ejected when a thermal event occurs in some battery modules may safely be discharged to the outside of the battery pack without affecting other battery modules inside the battery pack.

According to another aspect of the present disclosure, a function for controlling the flow of a venting gas may be added by creating a venting channel in the pack cover, which is used only for covering the pack housing in general.

According to another aspect of the present disclosure, the venting gas generated in the battery modules may be discharged with a time difference by being discharged through venting channels having different lengths.

According to another aspect of the present disclosure, by applying the channel cover, while the venting gas generated in each of the plurality of battery modules is being discharged through the first center venting channel and the second center venting channel, it is possible to prevent the venting gas from moving downward and affecting other adjacent battery modules.

According to another aspect of the present disclosure, since the accommodation spaces of the first battery modules adjacent to each other and the accommodation spaces of the second battery modules adjacent to each other are structurally isolated from each other by a barrier, it is possible to prevent the venting gas generated in some battery modules from moving toward adjacent battery modules.

According to another aspect of the present disclosure, the first barrier and/or the second barrier may have an approximate beam shape with an empty inner space, thereby not only improving the stiffness of the battery pack and blocking the movement of the venting gas between adjacent accommodation spaces, but also reducing the weight of the battery pack.

According to another aspect of the present disclosure, the effect of preventing the venting gas from moving into the gap between the barrier and the pack cover and/or the pack housing may be further improved.

According to another aspect of the present disclosure, when a large amount of gas is generated at once to increase the internal pressure of the battery pack, the internal pressure of the battery pack may be quickly reduced through a gas collection space. The gas may be discharged in an intended direction through the venting device, and even if a lot of venting gas is instantaneously generated, the gas may be discharged more rapidly and smoothly by increasing the process capacity or number of venting devices.

However, the technical problem to be solved by the present disclosure is not limited to the above-mentioned problem, and other problems not mentioned will be clearly understood by those skilled in the art from the description of the invention described below.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is an exploded perspective view showing a battery pack according to the present disclosure.
FIG. 2 is a perspective view showing the appearance of a battery pack according to the present disclosure.
FIGS. 3 and 4 are diagrams showing a battery module included in the battery pack according to the present disclosure.
FIGS. 5 to 8 are diagrams showing a moving path of a venting gas generated in each battery module included in the battery pack according to the present disclosure.
FIGS. 9 and 10 are diagrams showing a pack cover included in the battery pack according to the present disclosure.
FIG. 11 is an enlarged view showing the B portion of FIG. 10.
FIG. 12 is a diagram showing a barrier included in the battery pack according to the present disclosure.
FIG. 13 is a cross-sectional view schematically showing an exemplary shape of a cross-section taken along line A-A' in FIG. 2.
FIG. 14 is a diagram showing a collection space and a venting device included in the battery pack according to the present disclosure.
FIG. 15 is a diagram showing a vehicle according to the present disclosure.

### BEST MODE

Hereinafter, preferred embodiments of the present disclosure will be described in detail with reference to the accompanying drawings. The accompanying drawings illustrate a preferred embodiment of the present disclosure and together with the foregoing disclosure, serve to provide further understanding of the technical features of the present disclosure, and thus, the present disclosure is not construed as being limited to the drawing. Like reference signs designate like components. Also, in the drawings, the thickness, ratio, and dimensions of components may be exaggerated for effective description of technical content.

It should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

In this specification, terms indicating directions such as up, down, left, right, front, and back are used, but these terms are only for convenience of explanation, and it is apparent to those skilled in the art that the terms may vary depending on the location of the target object or the location of the observer.

Therefore, the description proposed herein is just a preferable example for the purpose of illustrations only, not intended to limit the scope of the disclosure, so it should be understood that other equivalents and modifications could be made thereto without departing from the scope of the disclosure.

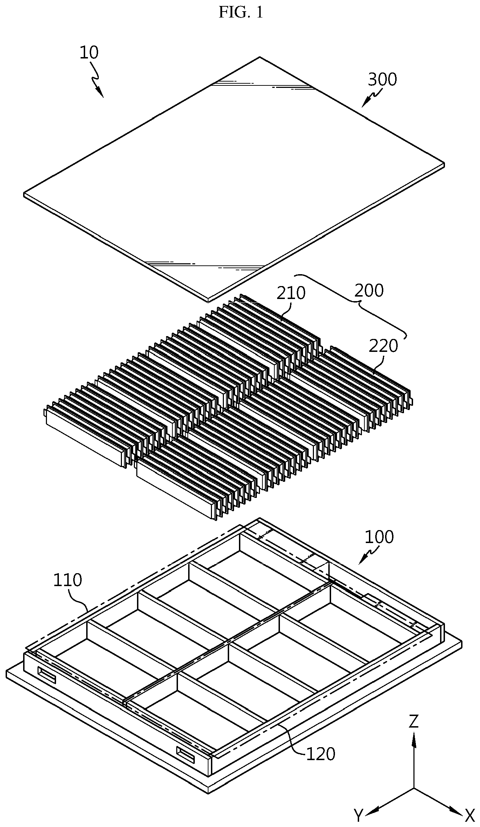

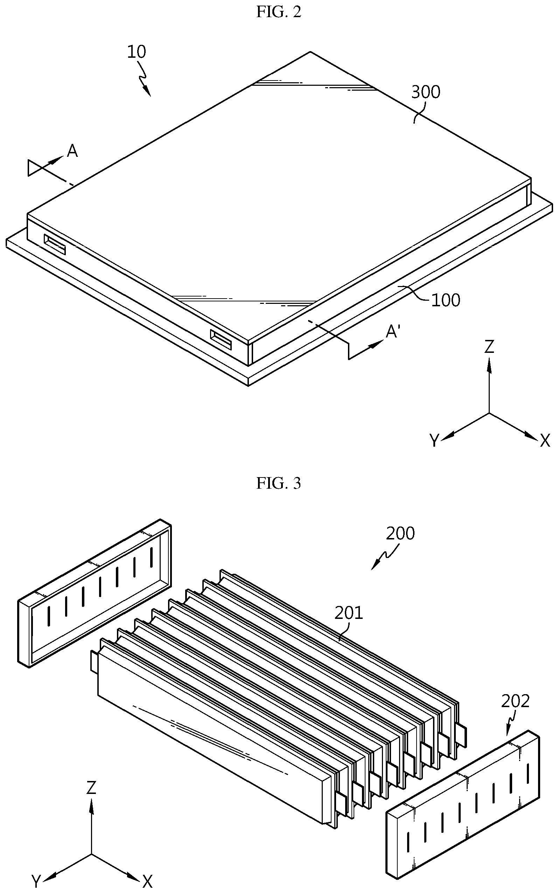

FIG. 1 is an exploded perspective view showing a battery pack according to the present disclosure. FIG. 2 is a perspective view showing the appearance of a battery pack according to the present disclosure.

Referring to FIGS. 1 and 2, the battery pack 10 according to the present disclosure includes a pack housing 100, a first battery module 210, a second battery module 220, and a pack cover 300.

The pack housing 100 may include a first accommodation space 110 and a second accommodation space 120 spaced apart from the first accommodation space 110. However, the accommodation space provided in the pack housing 100 is not limited only to the first accommodation space 110 and the second accommodation space 120.

The first battery module 210 may be disposed within the first accommodation space 110. The first battery module 210 may be provided in plurality. The second battery module 220 may be disposed within the second accommodation space 120. The second battery module 220 may be provided in plurality. For example, as shown in FIG. 1, four first battery modules 210 may be disposed within the first accommodation space 110, and four second battery modules 220 may be disposed within the second accommodation space 120.

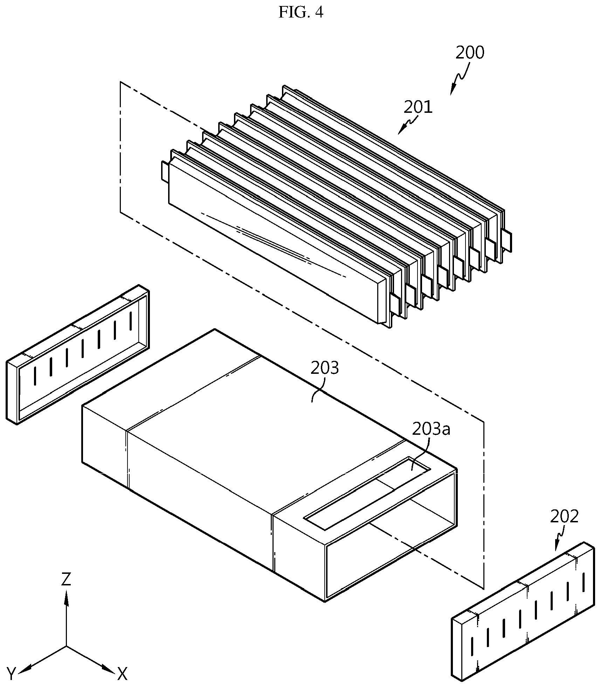

FIGS. 3 and 4 are diagrams showing a battery module included in the battery pack according to the present disclosure.

Referring to FIG. 3, the battery module 200 may include a battery cell 201. The battery cell 201 may be provided in plurality. The battery cell 201 may mean a secondary battery. The battery cell 201 may include an electrode assembly, an electrolyte, a battery case accommodating the electrode assembly and the electrolyte, and a pair of electrode leads connected to the electrode assembly and drawn out of the battery case. The battery cell 201 may be, for example, a pouch-type secondary battery. However, other types of secondary batteries, such as a cylindrical battery or prismatic battery, may also be employed as the battery cell 201 of the present disclosure.

When the battery cell 201 is provided in plurality, the plurality of battery cells 201 may be electrically connected. The battery module 200 may further include a bus bar frame assembly 202 for electrically connecting the plurality of battery cells 201 to each other. The bus bar frame assembly 202 may be provided in a pair, for example. In this case, the pair of bus bar frame assemblies 202 may be coupled to one side and the other side of the longitudinal direction (direction parallel to the X-axis) of the battery cell 201, respectively.

Referring to FIG. 4, the battery module 200 may further include a module case 203. The module case 203 may be configured to accommodate at least one battery cell 201. The module case 203 may include a venting hole 203a. When a venting gas is generated from the battery cell 201 accommodated in the inner space, the venting hole 203a may be configured to discharge the generated venting gas from the inside of the module case 203 to the outside.

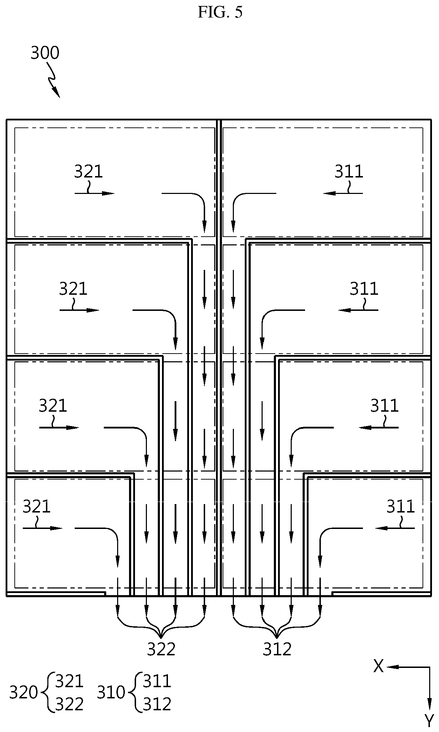

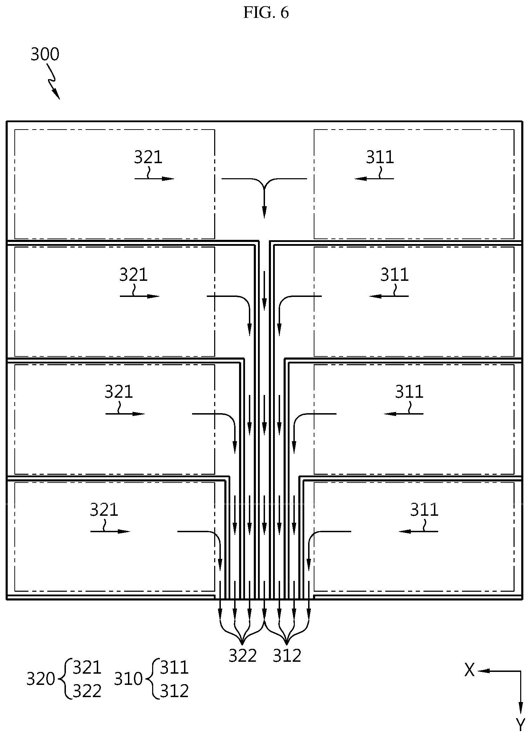

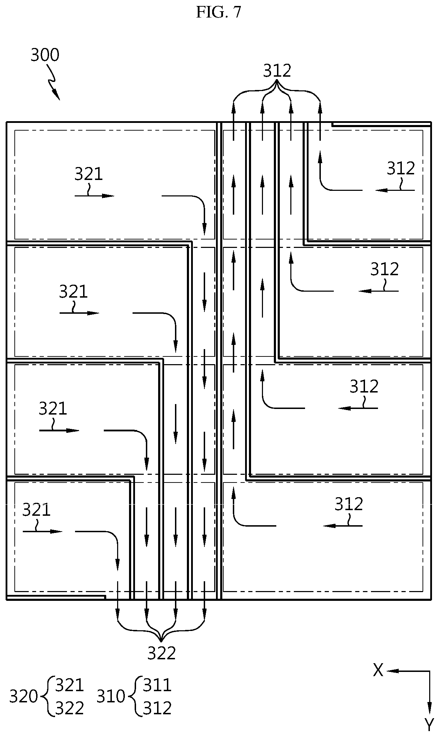

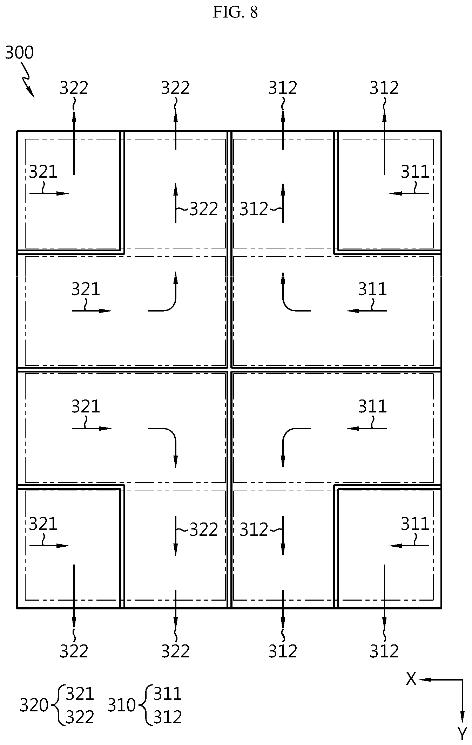

FIGS. 5 to 8 are diagrams showing a moving path of a venting gas generated in each battery module included in the battery pack according to the present disclosure.

Referring to FIGS. 5 to 8 together with FIG. 1, the pack cover 300 may include a plurality of first independent venting channels 310 and a plurality of second independent venting channels 320.

The plurality of first independent venting channels 310 may be configured to guide a venting gas generated in each of the plurality of first battery modules 210 to the outside of the pack housing 100. The plurality of second independent venting channels 320 may be configured to guide a venting gas generated in each of the plurality of second battery modules 220 to the outside of the pack housing 100. The pack cover 300 may be coupled with the pack housing 100 to form a venting channel between the upper part of the battery module 200 and the inner surface of the pack cover 300.

FIGS. 5 to 8 show a moving path of the venting gas generated in each battery module in the structure of the battery pack 10 according to various embodiments of the present disclosure. The venting gas generated in each battery module may be discharged to the outside of the battery pack 10 through an independent venting path. The venting gas generated in each battery module may be discharged through a venting channel having a longer length as the venting gas generated in a battery module farther from the location where the venting gas is discharged.

According to this configuration of the present disclosure, it is possible to add a function of controlling the flow of a venting gas by creating a venting channel in the pack cover 300, which is used only for covering the pack housing 100 in a general case. Specifically, according to this configuration of the present disclosure, when a thermal event occurs in each battery module, the flame and venting gas may be discharged along the first independent venting channel 310 and the second independent venting channel 320 formed between the upper part of the battery module 200 and the inner surface of the pack cover 300, whereby the possibility of a thermal event spreading toward adjacent battery modules 200 may be significantly reduced. In addition, the temperature of the venting gas may drop during movement of the venting gas, and even when a flame is generated together with the venting gas, the intensity of the flame may be weakened while moving along the venting channel. Accordingly, it is possible to remove or reduce damage that may occur due to the ejection of high-temperature venting gas and flame to the outside. In particular, the venting gas generated in each of the plurality of battery modules 200 may be discharged at a time difference by being discharged through venting channels having different lengths and independent so as not to communicate directly with each other.

Referring back to FIGS. 5 to 8, the first independent venting channel 310 may include a first side venting channel 311 and a first center venting channel 312. The second independent venting channel 320 may include a second side venting channel 321 and a second center venting channel 322.

The first side venting channel 311 may guide the venting gas generated in each of the plurality of first battery modules 210 in a first direction (positive X-axis direction) toward the second accommodation space 120. The second side venting channel 321 may guide the venting gas generated in each of the plurality of second battery modules 220 in a third direction (negative X-axis direction) toward the first accommodation space 110.

The first center venting channel 312 communicates with the first side venting channel 311 and may be configured to guide the venting gas generated in each of the plurality of first battery modules 210 in a second direction (positive Y-axis direction) perpendicular to the first direction (positive X-axis direction). The second center venting channel 322 communicates with the second side venting channel 321 and may be configured to guide the venting gas generated in each of the plurality of second battery modules 220 in a fourth direction (negative Y-axis direction) perpendicular to the third direction (negative X-axis direction).

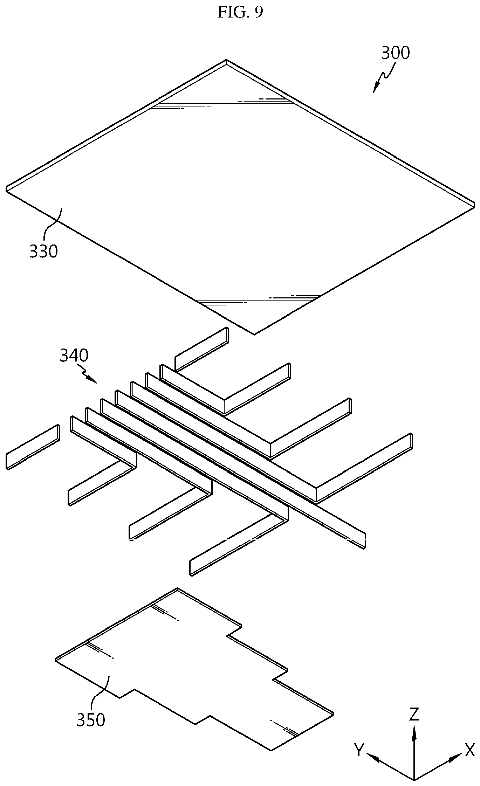

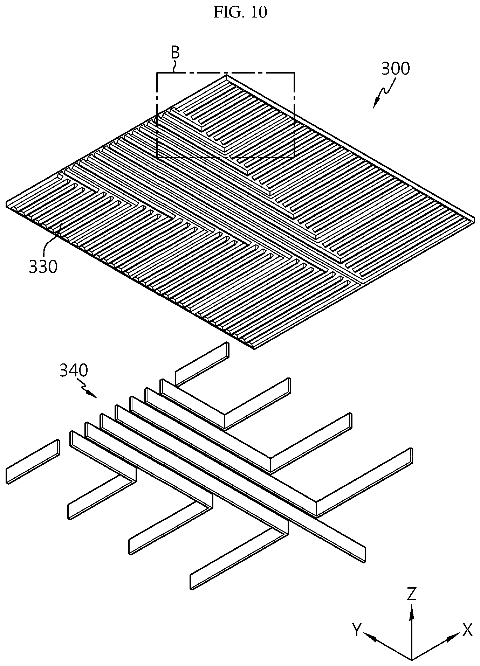

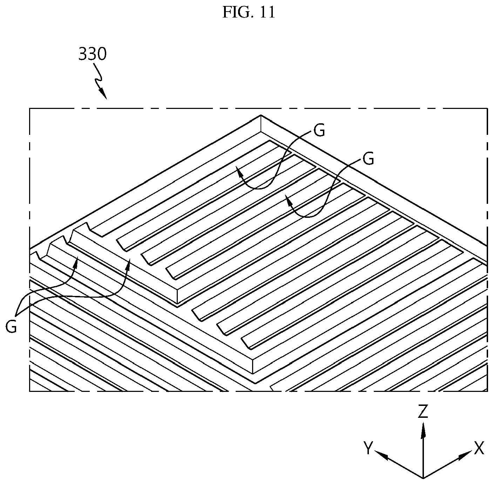

FIGS. 9 and 10 are diagrams showing a pack cover included in the battery pack according to the present disclosure. FIG. 11 is an enlarged view showing the B portion of FIG. 10.

Referring to FIGS. 9 and 10, the pack cover 300 may include a guide unit 340.

The guide unit 340 may be provided at a corresponding position between a plurality of first independent venting channels 310 adjacent to each other and a corresponding position between a plurality of second independent venting channels 320 adjacent to each other, respectively. The guide unit 340 may be configured to block communication between the plurality of first independent venting channels 310 adjacent to each other and communication between the plurality of second independent venting channels 320 adjacent to each other.

According to this configuration of the present disclosure, the venting gas generated in each of the plurality of battery modules 200 may be discharged through mutually independent venting channels. Therefore, when a thermal event occurs in each battery module, the effect on other battery modules can be minimized.

Referring to FIGS. 9 to 11, the pack cover 300 may include a cover plate 330 and/or a channel cover 350.

The cover plate 330 may be configured to cover the accommodation space of the pack housing 100. A guide unit 340 may be coupled to an inner surface of the cover plate 330. The first independent venting channel 310 and the second independent venting channel 320 may be spaces surrounded by the cover plate 330 and the guide unit 340. The first independent venting channel 310 and the second independent venting channel 320 may have the shape of a groove G formed on the inner surface of the cover plate 330, respectively. The shape of the groove G may be the first independent venting channel 310 and the second independent venting channel 320. A plurality of grooves G may be provided to form the first independent venting channel 310. A plurality of grooves G may be provided to form the second independent venting channel 320.

The channel cover 350 may be provided at a corresponding position between the first accommodation space 110 and the first center venting channel 312 and a corresponding position between the second accommodation space 120 and the second center venting channel 322, respectively. The channel cover 350 may be configured such that the guide unit 340 is seated thereon. The channel cover 350 may be coupled to the lower end of the guide unit 340. The first center venting channel 312 and the second center venting channel 322 may be spaces surrounded by the cover plate 330, the guide unit 340, and the channel cover 350.

At least some of the cover plate 330, the guide unit 340, and the channel cover 350 may be integrally formed with each other, and the present disclosure is not limited to the case where individual members are separately manufactured and coupled.

According to this configuration of the present disclosure, the venting gas generated in each of the plurality of battery modules 200 may be introduced into the first independent venting channel 310 and the second independent venting channel 320 in the remaining regions except for the region corresponding to the channel cover 350. In addition, due to the application of the channel cover 350, during the process in which the venting gas generated in each of the plurality of battery modules 200 is discharged through the first center venting channel 312 and the second center venting channel 322, the venting gas may be prevented from moving downward and affecting other adjacent battery modules.

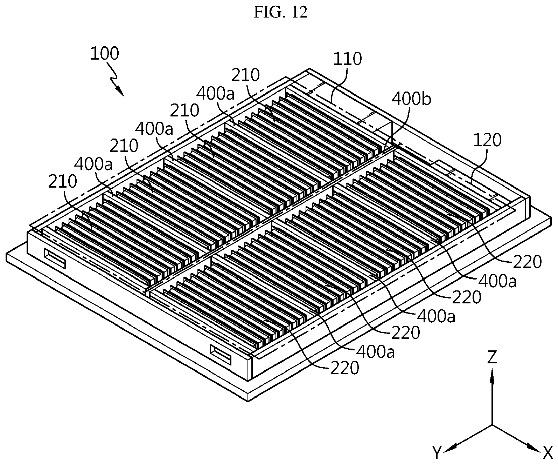

FIG. 12 is a diagram showing a barrier included in the battery pack according to the present disclosure.

Referring to FIG. 12, the battery pack 10 may include a first barrier 400a and/or a second barrier 400b.

The first barrier 400a may be disposed at a corresponding position between the first battery modules 210 adjacent to each other and a corresponding position between the second battery modules 220 adjacent to each other, respectively.

The second barrier 400b may be configured to block the movement of the venting gas between the first accommodation space 110 and the second accommodation space 120. The second barrier 400b may be disposed at a corresponding position between the first accommodation space 110 and the second accommodation space 120. The second barrier 400b may be coupled with the pack cover 300 and/or the pack housing 100. The coupling may be performed by welding or bolting. The second barrier 400b may have an approximate beam shape with an empty inside. The empty space formed in the second barrier 400b can be used as a passage through which wires connecting the battery modules pass. The wires may be protected from physical impact by the second barrier 400b.

According to this configuration of the present disclosure, the accommodation spaces of the first battery modules 210 adjacent to each other and the accommodation spaces of the second battery modules 220 adjacent to each other may be structurally isolated from each other by a barrier. Therefore, the venting gas generated in each battery module does not move toward adjacent battery modules, but moves only through the first independent venting channel 310 and the second independent venting channel 320. During this movement, the temperature of the venting gas may decrease and the intensity of the flame may be weakened. When the first barrier 400a and/or the second barrier 400b has an approximate beam shape with an empty inner space, the effect of reducing the weight of the battery pack 10 can be obtained, in addition to the effect of improving the rigidity of the battery pack 10 and the effect of blocking the movement of the venting gas between adjacent accommodation spaces according to the application of the first barrier 400a and/or the second barrier 400b.

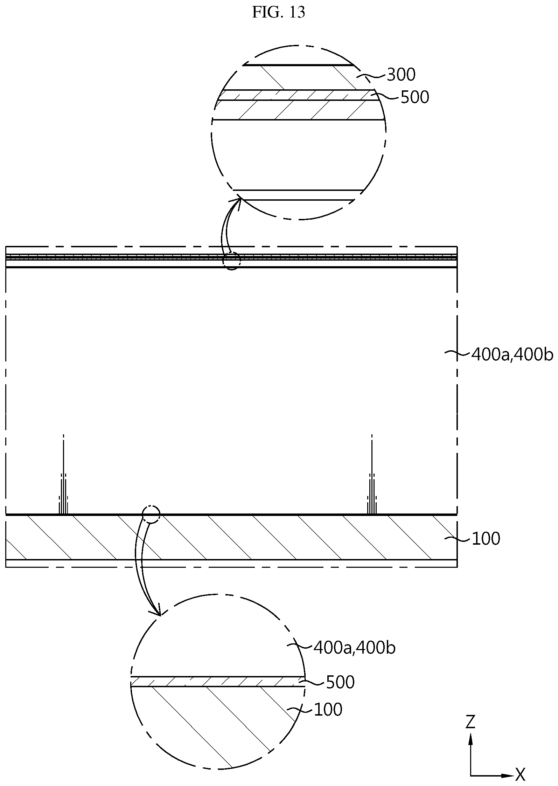

FIG. 13 is a cross-sectional view schematically showing an exemplary shape of a cross-section taken along line A-A' in FIG. 2.

Referring to FIG. 13, the battery pack 10 may include a sealing member 500. The sealing member 500 may be provided to at least one position between the first barrier 400a and the pack cover 300 and between the first barrier 400a and the pack housing 100. The sealing member 500 may be provided to at least one position between the second barrier 400b and the pack cover 300 and between the second barrier 400b and the pack housing 100. The sealing member 500 may be configured to cover at least a part of the coupling portion between the pack cover 300 and/or the pack housing 100 and the barriers 400a, 400b.

According to this configuration of the present disclosure, the effect of preventing the venting gas from moving into the gap between the pack cover 300 and/or the pack housing 100 and the barriers 400a, 400b can be further improved.

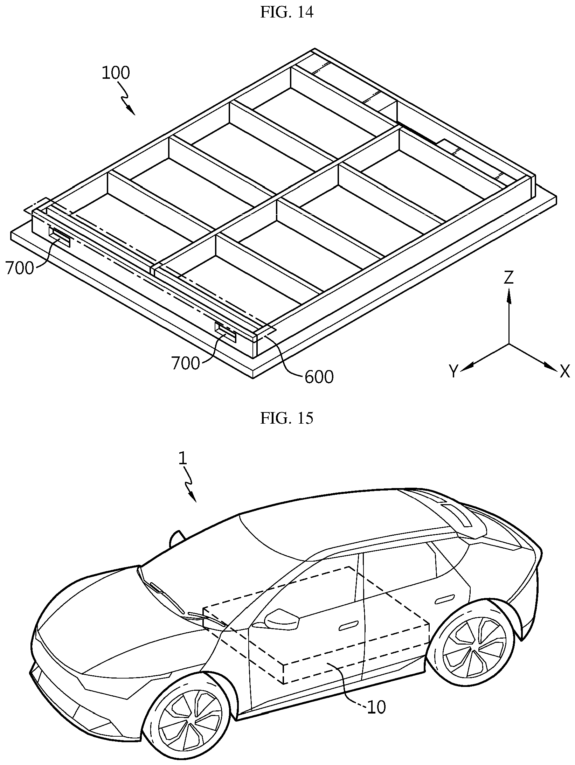

FIG. 14 is a diagram showing a collection space and a venting device included in the battery pack according to the present disclosure.

Referring to FIG. 14, the battery pack 10 may include a gas collection space 600 and/or a venting device 700.

The gas collection space 600 may be provided to at least one of one side and the other side of the pack housing 100. The venting gas generated in each battery module moves through the first independent venting channel 310 and the second independent venting channel 320 and is collected in the gas collection space 600. For example, the gas collection space 600 may be provided at an end of the pack housing 100 in the longitudinal direction (positive Y-axis direction). However, the present disclosure is not limited to the shape, location, and number of the gas collection space 600 shown in FIG. 14.

The venting device 700 may be configured to discharge the venting gas in the gas collection space 600 to the outside of the pack housing 100. The venting device 700 is formed to penetrate the pack housing 100 and may be in the form of a simple hole. In addition, the venting device 700 may be a specific device that not only has a completely open form, but also has a form not completely open, but is closed in a normal state and may be opened according to a change in pressure or temperature. The venting device 700 may be, for example, a one-way valve.

According to this configuration of the present disclosure, when the internal pressure of the battery pack 10 increases since a large amount of gas is generated at once, the internal pressure of the battery pack 10 may be quickly reduced through the gas collection space 600. The gas may be discharged in the intended direction through the venting device 700, and even if a lot of venting gas is instantaneously generated, the gas may be discharged more rapidly and smoothly by increasing the processing capacity or number of the venting device 700.

FIG. 15 is a diagram showing a vehicle according to the present disclosure.

Referring to FIG. 15, the battery pack 10 may be applied to a vehicle 1 such as an electric vehicle 1 or a hybrid vehicle 1. That is, the vehicle 1 according to the present disclosure may include the battery pack 10 according to the present disclosure. In addition, the vehicle 1 according to the present disclosure may further include various other components included in a vehicle 1 in addition to the battery pack 10. For example, the vehicle 1 according to the present disclosure may further include a vehicle body, a motor, and a control device such as an electronic control unit (ECU), in addition to the battery pack 10 according to the present disclosure.

As described above, the present disclosure has been described based on preferred embodiments with reference to the accompanying drawings, but it is clear that many various and obvious modifications can be made from this description to those skilled in the art without departing from the scope of the present disclosure. Accordingly, the scope of the present disclosure should be construed by the claims described to include such many modified examples.

### [Explanation of reference signs]

1: vehicle
10 : battery pack
100 : pack housing
110 : first accommodation space
120 : second accommodation space
200 : battery module
201 : battery cell
202 : bus bar frame assembly
203 : module case
203a : venting hole
210 : first battery module
220 : second battery module
300 : pack cover
310 : first independent venting channel
311 : first side venting channel
312 : first center venting channel
320 : second independent venting channel
321 : second side venting channel
322 : second center venting channel
330 : cover plate
340 : guide unit
350 : channel cover
400a : first barrier
400b : second barrier
500 : sealing member
600 : gas collection space
700 : venting device
G : groove

## Claims

1. A battery pack comprising:
a pack housing having a first accommodation space and a second accommodation space spaced apart from the first accommodation space;
a plurality of first battery modules disposed within the first accommodation space;
a plurality of second battery modules disposed within the second accommodation space; and
a pack cover configured to include a plurality of first independent venting channels configured to guide a venting gas generated in each of the plurality of first battery modules to the outside of the pack housing and a plurality of second independent venting channels configured to guide a venting gas generated in each of the plurality of second battery modules to the outside of the pack housing.

2. The battery pack according to claim 1, wherein the plurality of first independent venting channels include:
a first side venting channel for guiding the venting gas generated in each of the plurality of first battery modules in a first direction toward the second accommodation space; and
a first center venting channel that communicates with the first side venting channel and guides the venting gas generated in each of the plurality of first battery modules in a second direction perpendicular to the first direction.

3. The battery pack according to claim 2, wherein the plurality of second independent venting channels include:
a second side venting channel for guiding the venting gas generated in each of the plurality of second battery modules in a third direction toward the first accommodation space; and
a second center venting channel that communicates with the second side venting channel and guides the venting gas generated in each of the plurality of second battery modules in a fourth direction perpendicular to the third direction.

4. The battery pack according to claim 1, wherein the pack cover includes a guide unit provided at a corresponding position between the plurality of first independent venting channels adjacent to each other and a corresponding position between the plurality of second independent venting channels adjacent to each other, respectively.

5. The battery pack according to claim 4, wherein the guide unit is configured to block communication between the plurality of first independent venting channels adjacent to each other and communication between the plurality of second independent venting channels adjacent to each other.

6. The battery pack according to claim 3, wherein the pack cover includes:
a guide unit provided at a corresponding position between the plurality of first independent venting channels adjacent to each other and a corresponding position between the plurality of second independent venting channels adjacent to each other;
a cover plate configured to cover the accommodation space of the pack housing; and
a channel cover provided at a corresponding position between the first accommodation space and the first center venting channel and between the second accommodation space and the second center venting channel, respectively, and configured so that the guide unit seats thereon.

7. The battery pack according to claim 6, wherein the first independent venting channel and the second independent venting channel have a groove shape formed on an inner surface of the cover plate, respectively.

8. The battery pack according to claim 1, wherein the battery pack includes a first barrier disposed at a corresponding position between the first battery modules adjacent to each other and a corresponding position between the second battery modules adjacent to each other, respectively.

9. The battery pack according to claim 1, wherein the battery pack includes a second barrier disposed at a corresponding position between the first accommodation space and the second accommodation space.

10. The battery pack according to claim 8, wherein the first barrier is configured to block the movement of a venting gas between the accommodation spaces of the first battery modules adjacent to each other and the movement of a venting gas between the accommodation spaces of the second battery modules adjacent to each other.

11. The battery pack according to claim 9, wherein the second barrier is configured to block the movement of a venting gas between the first accommodation space and the second accommodation space.

12. The battery pack according to claim 8, wherein the battery pack includes a sealing member provided to at least one position between the first barrier and the pack cover and between the first barrier and the pack housing.

13. The battery pack according to claim 1, wherein the pack housing has a gas collection space formed in at least one of one side and the other side.

14. The battery pack according to claim 13, wherein the battery pack includes a venting device configured to allow the venting gas in the gas collection space to be discharged to the outside of the pack housing.

15. A vehicle, comprising the battery pack according to any one of claims 1 to 14.
